# EUROPEAN PATENT APPLICATION

(11) **EP 4 738 412 A1**
(43) Date of publication of application: **06.05.2026**
(21) Application number: 25212598.4
(22) Date of filing: 31.10.2025
(51) Int. Cl.: H01H 13/06, H01H 13/08

(54) **ELECTRIC ACTUATION MEMBER FOR A BICYCLE**

(30) Priority: 04.11.2024 IT 202400024648
(71) Applicant: Campagnolo S.r.l., 36100 Vicenza (VI) (IT)
(72) Inventor: Meggiolan, Mario, Creazzo (IT); Minto, Marco, Padova (IT)
(74) Representative: Montanari, Daniele

(57) **Abstract**

The electric actuation member comprises a body (2) intended to be mounted on a bicycle and to be connected to an electric device, a switch (12) housed in the body (2) and facing outwards thereof, operable by pressure in a direction of actuation (X) towards the body (2). An elastic sheath (6) envelops the body (2) of the actuation member and a pusher (20) is provided on the sheath (6) at the switch (12).

The pusher (20) is rigid along the direction of actuation (X), so as to be able to transmit the click of the switch when it is operated, so that it is perceived by both the hearing and the touch of the cyclist.

## Description

The present invention refers to an electric actuation member for a bicycle.

Several electrically operated devices can be provided on board a modern bicycle, such as for example a gear shift (front or rear), a cyclocomputer or other. In order to operate these devices, special electrical actuation devices are provided. It is also possible for electric actuation members to control accessories that are not mounted on the bicycle, but that are carried by the cyclist; for example, a smartphone provided with an application relative to the cyclist's activity can receive commands that the cyclist sends by acting not directly on the smartphone (which may be kept and protected in a pocket, a backpack or the like) but on a special electric actuation member that has been previously mounted on the bicycle, in a position easily accessible to the cyclist, on the handlebar or on the frame.

A cyclist engaged in a competition, but also a demanding cyclist, always wishes to have total and easy control over all the functions of the bicycle, so that his/her attention is not significantly distracted by the pedalling effort, by the engagement for riding, as well as perhaps by monitoring the behaviour of other cyclists during a competition.

Electrically operated devices (also called electro-actuated) are obviously of great help in satisfying this need of the cyclist, since their actuation does not require an appreciable physical effort but only the simple intervention on an electric actuation member.

Normally, these electric actuation members are provided with an elastic coating sheath, which serves both to protect the actuation member from atmospheric agents and dust, and to ensure an optimal grip by the cyclist when the actuation member is placed in such a position as to be gripped by the cyclist while pedalling; this is typically the case in which the electric actuation member is on a control for operating an electro-actuated gear shift and is therefore mounted on the handlebar of the bicycle so that it can also be gripped.

The electrical actuation member comprises as a fundamental element a switch, which must be pressed by the cyclist in order to obtain the desired actuation; the elastic sheath, which also covers the switch, can be sufficiently deformable so as not to prevent the cyclist from acting on the switch.

It is known to conform the sheath at the covered switch so that the cyclist can perceive the position where he/she must press to operate the switch. See for example EP 4230511, where the sheath 122 includes a protruding or recessed area 256, or EP 2082953, where the sheath 148 has a protruding portion 148a.

However, it has been verified that the actuation through the elastic sheath hinders the correct perception by the cyclist of the successful actuation. In fact, the switch transmits - by its very nature - both a tactile and an acoustic click sensation, but the elastic sheath greatly attenuates this sensation. As a result, the cyclist acting on the actuation member covered by the elastic sheath is not able to easily perceive whether he/she has actually performed the actuation or not. The cyclist may be bothered by this difficulty in perceiving the click, both because he/she may be forced to devote more attention to the actuation than desired in order to perceive the click, and because he/she may be mistakenly induced to repeat an actuation he/she has not perceived the click thereof; obviously, if an actuation is repeated the result may be very different from the desired one.

It is also known to provide an element slidingly inserted in a through hole in the elastic sheath, by means of which the cyclist can act on the switch. See for example EP 4124554, where the sheath 20 has holes in which the buttons 16, 17 are movable. This solution responds well to the needs of the cyclist, allowing him/her to perceive the click and therefore providing him/her with a clear perception of the successful actuation, but exposes the switch to possible infiltration of moisture and/or dirt.

There is therefore the problem of allowing easy and safe actuation by the cyclist, while maintaining safe protection of the switch from moisture and dust.

This problem is solved, according to the invention, by an electric actuation member for a bicycle according to claim 1; preferred features are indicated in the dependent claims.

More in particular, the electric actuation member comprises a body intended to be mounted on a bicycle and to be connected to an electric device, a switch housed in the body and facing outwards thereof, operable by pressure in a direction of actuation X towards the body, an elastic sheath enveloping the body of the actuation member, a pusher provided on the sheath at the switch, and is characterized in that the pusher at least partially crosses the sheath and is rigid along the direction of actuation X, at least for a prevailing portion thereof.

By prevailing portion of the pusher along the direction of actuation X is to be understood a portion of the pusher covering an extension along the direction of actuation X that is much greater than the extension along the same direction X of the possible portion of the pusher that is not rigid. Preferably, the rigid prevailing portion covers almost the entirety of the pusher.

Thanks to this prevailing rigid portion, the pusher is able to both transmit the characteristic sound of the click to the outside of the elastic sheath, and to transmit the tactile sensation of the click itself to the finger. The cyclist therefore has perfect control over the operation he/she is performing.

Preferably, the pusher is mounted non-slidingly and sealed in a through hole made in the sheath and comprises a first end, internal to the sheath and oriented towards the switch, and a second end, external to the sheath, accessible by a finger of a cyclist.

In this way, the cyclist acts directly on the second end of the pusher, which, however, does not slide in the through hole but is sealed there; consequently, the total seal of the elastic sheath is guaranteed at the switch which therefore does not run the risk of being reached by moisture or dust. Furthermore, even in the absence of sliding between the pusher and the sheath, the mobility of the pusher is guaranteed by the elasticity of the sheath that does not rest on the switch but is spaced therefrom, so that it can easily deform under the thrust of the finger of a cyclist.

In an alternative embodiment, the pusher is mounted internally to the sheath and comprises a first end, oriented towards the switch, and a second end adhering to the sheath, indirectly accessible by a finger of a cyclist through the sheath itself.

Also in this case, the seal is obviously guaranteed, since the sheath is not interrupted in the slightest at the switch. However, it has been verified that the rigid pusher interposed between the elastic sheath and the switch still allows the tactile and sound sensations of the click to be transmitted to the outside when the switch is operated.

Preferably, the pusher is made of metal or rigid polymeric material.

Both these materials are suitably rigid and therefore suitable for the realization of the pusher. The second one, then, can allow a possible realization together with the elastic sheath by co-moulding.

Preferably, the pusher comprises a contact coating of elastomeric material on its first end.

The elastomeric coating allows better contact with the switch. Especially in the event that the switch is provided with its own protection (for example, a veil made of plastic material, which encloses the switch and the electronic board on which it is possibly mounted), the elastomeric coating of the first end of the pusher prevents abrasion or breakage of the switch protection from occurring with prolonged use.

Preferably, the elastomeric material of the contact coating has much lower elasticity than the elasticity of the elastic sheath.

The limited elasticity of the contact coating allows to better transmit the click from the switch to the rigid portion of the pusher and therefore to the outside.

Preferably, the pusher comprises a central stem, a first head protruding from the stem and comprising the first end, a second head protruding from the stem and comprising the second end, wherein the stem is housed in the through hole in the sheath.

This so-to-say double mushroom configuration allows a very stable coupling between the pusher and the elastic sheath.

Preferably, before the pusher is mounted in the sheath, the through hole in the sheath has an inner diameter smaller than the outer diameter of the stem, so that the sheath is elastically clamped around the stem.

This configuration, thanks to the elastic clamping of the sheath around the stem of the pusher, contributes to ensuring seal against moisture or dirt.

Preferably, before the pusher is mounted in the sheath, the through hole in the sheath has a length greater than the length of the stem, so that the sheath is elastically compressed between the first and second head of the pusher.

This configuration, thanks to the elastic compression of the sheath between the pusher heads, also contributes to ensuring seal against moisture or dirt.

Preferably, the sheath comprises a first recessed seat, formed internally around the through hole, and wherein the first head is at least partially accommodated in the first seat.

The provision of a first seat that accommodates the first head of the pusher contributes to ensuring the stability of the positioning of the pusher with respect to the elastic sheath and to improving the sealing coupling between the sheath and the pusher.

Preferably, the sheath comprises a second recessed seat, formed externally around the through hole, wherein the second head is at least partially accommodated in the second seat.

The provision of a second seat that accommodates the second head of the pusher also contributes to ensuring the stability of the positioning of the pusher with respect to the elastic sheath and to improving the sealing coupling between the sheath and the pusher.

Preferably, the sheath internally comprises a relief extended around and spaced from the pusher, and wherein the body comprises a recess extended around and spaced from the switch, wherein the relief of the sheath is engaged in the recess of the body.

The coupling between the recess and the relief indirectly contributes to guiding the movement of the pusher when it is operated by the cyclist, preventing the elasticity of the sheath from being able to allow unwanted displacements of the pusher out of the direction of actuation X.

Preferably, the electric actuation member is provided for operating an electro-actuated gear shift on a control intended for mounting on a handlebar of the bicycle.

The invention is particularly interesting in this case, both because it is precisely in this case that it is most important for the cyclist to have the correct perception of the click (which confirms that the gear shift has been successfully operated), and because in this case the presence of the elastic sheath is practically essential, to guarantee a safe and comfortable grip by the cyclist while pedalling.

Preferably, the control is an integrated control, also comprising a brake lever.

Further characteristics and advantages of the invention will be more evident from the following description of a preferred embodiment thereof, made with reference to the appended drawings. In such drawings:
- fig. 1 is a side view of an electric actuation member for a bicycle, provided on an integrated control for operating an electro-actuated gear shift;
- fig. 2 is a sectional view of the electric actuation member of fig. 1;
- fig. 3 is an enlarged view of a detail of fig. 2;
- fig. 4 is a perspective view in local section of the electric actuation member of fig. 2;
- figs. 5, 6 and 7 show -in view and in section- the pusher only of the electric actuation member of fig. 1, separated from it;
- fig. 8 is a sectional view of a variant of the pusher of figs. 4, 5 and 6;
- fig. 9 is a sectional view similar to fig. 2, which shows a variant of the electric actuation member of fig. 2;

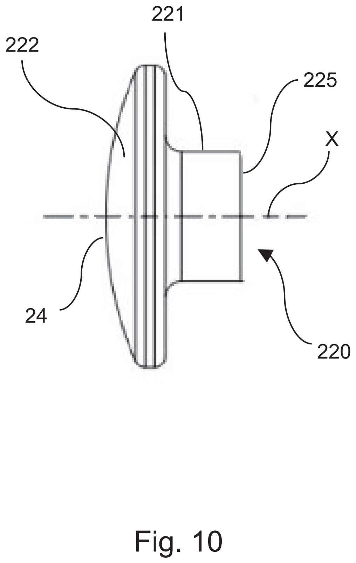

- fig. 10 is a side view of the pusher only of the variant of fig. 9.

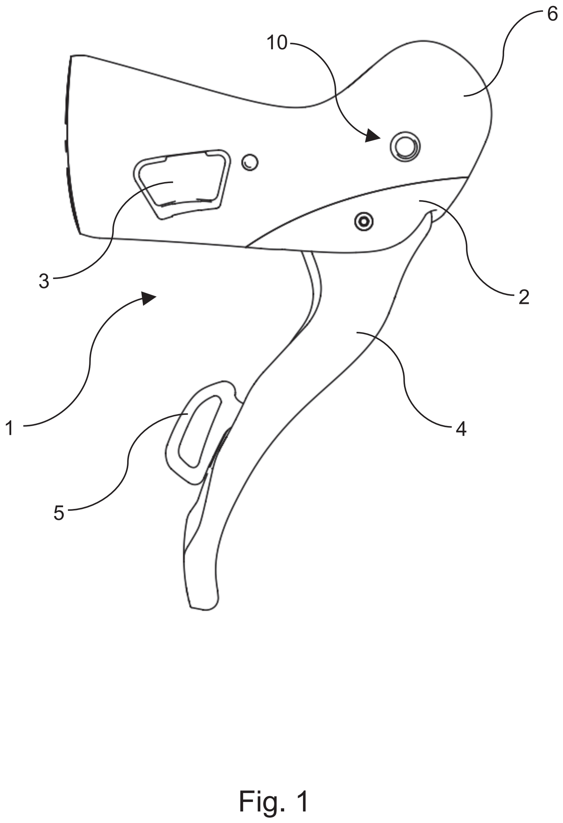

In the figures, in particular in figure 1, an integrated control **1** for operating an electro-actuated gear shift and a brake of a bicycle are shown. The integrated control 1 comprises a body **2** intended to be mounted on the handlebar of the bicycle; an actuator **3** for operating the gear shift, a lever **4** for operating the brake and a lever **5** for operating the gear shift are housed on the body 2; the body 2 is coated with an elastic sheath **6,** which covers the body 2 but leaves the actuator 3 free and accessible. The figures show neither the bicycle, nor the handlebar, nor the gear shift, nor the brake, as these are conventional elements in themselves.

It should be noted that on the bicycle and in particular on the integrated control 1 it can be provided for more instruments to control the gear shift: it is in fact normal that both an instrument controls only a specific gear shift action and that therefore more instruments are provided in order to be able to control more gear shift actions (for example, downshift or upshift, or single-shift or multiple-shift), and that in order to control the same action more instruments are provided, of a different type and/or in different positions on the body 2, so as to leave the cyclist the choice of which instrument to use to obtain a specific gear shift action, for example depending on which grip is held by the cyclist or on what the anatomical characteristics of his/her hand are.

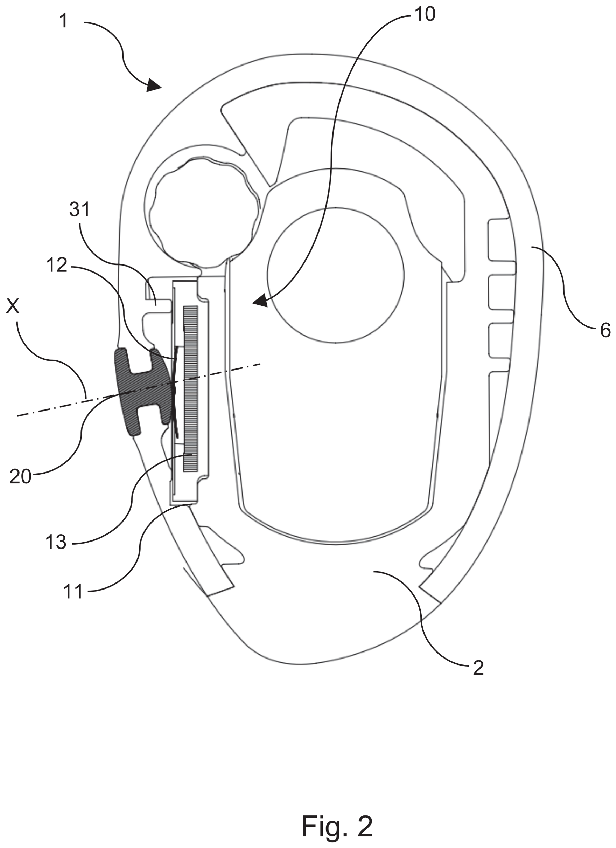

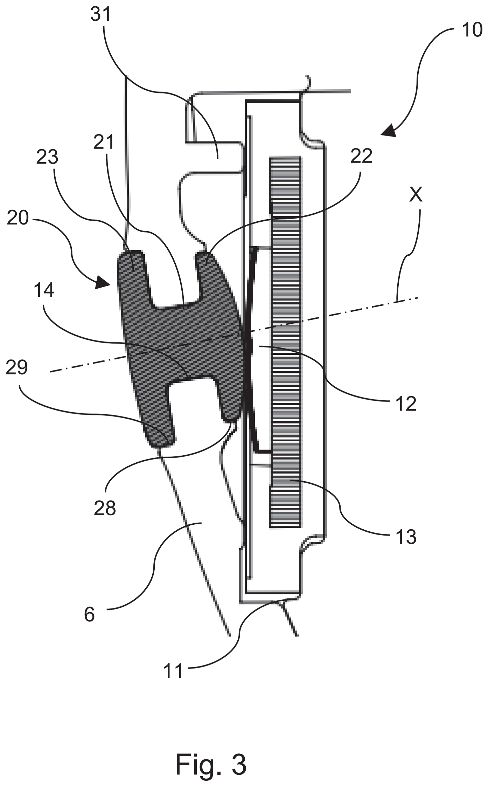

As better visible in figures 2 to 4, the integrated control 1 comprises an electric actuation member **10,** to control an electric device; this device can be a device mounted on board the bicycle (for example, a gear shift, a cyclocomputer or other) or a device carried by the cyclist (for example, a smartphone or other), which device can be connected to the electric actuation member 10 via an electrical connection or via a wireless telematic connection (Wi-Fi, Bluetooth^{™} or the like).

The electric actuation member 10 comprises a body which -in the case illustrated in the figures - is the same body 2 as the integrated control. In the body 2 there is provided a seat **11** where a switch **12,** facing outwards of the body 2, is housed. The switch 12 is for example mounted on a board **13,** which also comprises electronic means for transmitting the desired signal following the actuation of the switch; alternatively, the board 13 is connected to a second board on which these means are provided; both these means and any second board are in themselves conventional and are not illustrated.

The switch 12 is configured so as to send the signal following a pressure exerted on it according to an actuation axis **X,** substantially perpendicular to a plane tangent to the body 2 in the position in which the switch 12 is located.

The sheath 6 that envelops the body 2 is spaced from the switch 12, and at this switch 12 it is associated with a pusher **20,** which at least partially crosses the thickness of the sheath 6, to allow the switch 12 to be operated from the outside of the elastic sheath 6. To this end, a through hole **14** is made in the sheath 6. Optionally, the pusher 20 is firmly anchored to the sheath 6.

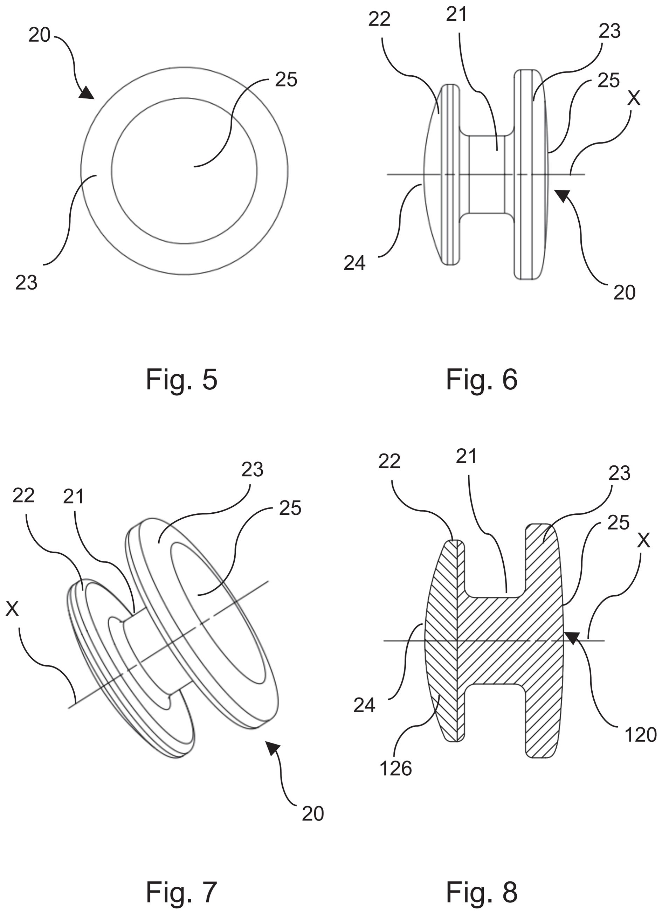

The pusher 20, as better illustrated in figures 5, 6 and 7, has a double mushroom structure extended along the actuation axis X and comprises a central stem **21** from which a first head **22** and a second head **23** protrude on opposite sides.

The stem 21 is inserted into the through hole 14. The through hole 14 -before the stem 21 is inserted- has an inner diameter smaller than the outer diameter of the stem 21 and therefore the sheath 6 is elastically clamped around the stem 21 when it is inserted in the through hole 14.

The length of the through hole 14 -before the stem 21 is inserted- is higher than the length of the stem 21 along the actuation axis X, i.e. than the distance between the first head 22 and the second head 23 and therefore the sheath 6 is elastically compressed between the first head 22 and the second head 23 of the pusher 20.

Each of the aforesaid conditions causes there to be a sealing coupling between the sheath 6 and the pusher 20, such that the pusher 20 is sealed in the through hole 14 and cannot slide therein. Thus, any possibility of passage of moisture or dust is excluded.

The first head 22 ends with a first end **24** of the pusher 20 oriented towards the switch 12, while the second head 23 ends with a second end **25** of the pusher 20 external to the sheath 6, accessible to the cyclist via a finger.

The pusher 20 is entirely made of a rigid material, for example of metal or a rigid polymeric material (such as Nylon^{tm} or the like).

Preferably, a first recessed seat **28,** formed internally to the sheath 6 around the through hole 14, is formed in the sheath 6. The first head 22 of the pusher 20 is at least partially accommodated in this first seat 28.

Preferably, a second recessed seat **29,** formed externally to the sheath 6 around the through hole 14, is formed in the sheath 6. The second head 23 of the pusher 20 is at least partially accommodated in this second seat 29.

Each of the aforesaid seats 28 and 29 contributes to ensuring the stability of the positioning of the pusher 20 with respect to the sheath 6 and to improving the sealing coupling between the sheath 6 and the pusher 20.

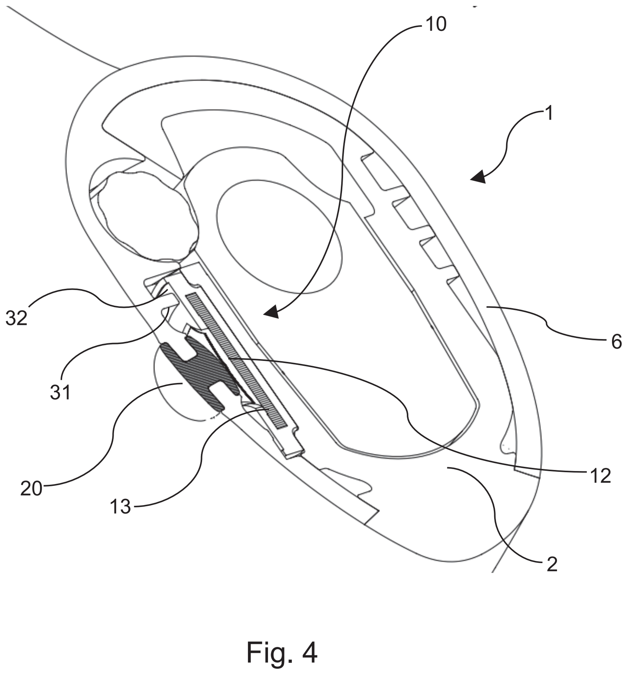

Preferably, the sheath 6 comprises on an inner face thereof, in contact with the body 2, a relief **31** extended around and spaced from the pusher 20. Correspondingly, the body 2 comprises a recess **32** (visible in figure 4) extended around and spaced from the switch 12. The relief 31 is in sliding engagement in the recess 32, in the direction of actuation X, thus providing a kind of guide for the movement with respect to the body 2 of the area of the sheath 6 where the pusher 20 is housed when it is pressed.

In use, the cyclist can operate the switch 12 by pressing with a finger on the second end 25 of the pusher 20. The elasticity of the sheath 6 and the fact that it is spaced from the switch 12 allow the finger pressure to push the pusher 20 in the direction of actuation X, with the first end 24 against the switch 12, operating it. The switch 12 thus operated produces the typical click, which is transmitted through the pusher 20 which is in contact with the switch 12. The cyclist therefore has the possibility to easily perceive the successful actuation of the switch 12 both through touch and through hearing.

The transmission of the click through the pusher 20 without substantial attenuations is made possible by the fact that the pusher 20 is rigid.

In figure 8, a pusher variant is shown, indicated with **120.** The pusher 120 is substantially the same as the pusher 20 and like that one it can be used in the electric actuation member 10; in figure 8, the parts of the pusher 120 corresponding to the parts of the pusher 20 are indicated with the same reference numerals. The only difference between the two pushers 20 and 120 is that the pusher 120 is not entirely made of a rigid material; in fact, at its first end 24, the pusher 120 is provided with a contact coating **126** of elastomeric material. The elastomeric material of the contact coating 126 preferably has much lower elasticity than the elasticity of the sheath 6. The contact coating 126 allows to soften the contact between the first head 22 of the pusher 120 and the switch 12, avoiding the wear of the latter.

In any case, along the direction of actuation X, the pusher 120 remains rigid over the extension of a prevailing portion thereof, i.e. all its extension minus the thickness of the contact coating 126. The presence of the contact coating 126 does not significantly affect the transmission of the click along the pusher 120.

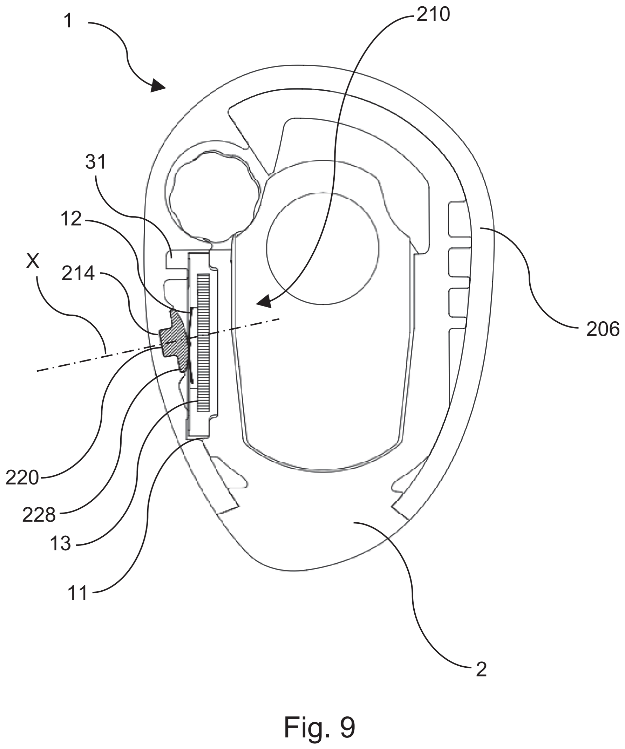

A variant of the electric actuation member **210** is shown in fig. 9, again provided on the integrated control 1. In the following and in figure 9, the elements of the electric actuation member 210 that are the same as those of the electric actuation member 10 are characterized by the same reference numerals and for these elements reference should be made to the previous description. Different but somewhat corresponding elements are marked with reference numerals increased by 200 and are described below.

In this variant, the body 2 is coated with an elastic sheath **206,** which covers the body 2 also at the switch 12, where the sheath 206 is provided with a blind hole **214,** open only towards the inside of the sheath 206 but not towards the outside.

In the seat 228, a pusher **220** is housed, which only partially crosses the thickness of the sheath 206 and which is provided with a stem **221** to which a head **222,** oriented with a first end **224** of the pusher 220 towards the switch 12, is associated. The stem 221 comprises a second end **225** of the pusher 220 and is housed in the blind hole 214, adhering to the sheath 206, while the head 222 is at least partially accommodated in a recessed seat **228,** formed internally to the sheath 206 around the blind hole 214. Optionally, the pusher 220 is firmly anchored to the sheath 206.

Like with the electrical actuation member 10, in use the cyclist may operate the switch 12 by pressing with a finger on the second end 225 of the pusher 220. The elasticity of the sheath 206 allows finger pressure to push the pusher 220 in the direction of actuation X, with the first end 224 against the switch 12, actuating it. The switch 12 thus operated produces the typical click, which is transmitted through the pusher 220 which is in contact with the switch 12.

The presence of the sheath 206 that covers the pusher 220 towards the outside results in a certain attenuation of the transmission of the click towards the outside; however, this attenuation is not such as to make the cyclist lose the possibility of easily perceiving the successful actuation of the switch 12 both through touch and through hearing.

This variant, therefore, also makes it easier for the cyclist to correctly perceive that the desired command has been successfully sent.

## Claims

1. Electric actuation member comprising a body (2) intended to be mounted on a bicycle and to be connected to an electric device, a switch (12) housed in the body (2) and facing outwards thereof, operable by pressure in a direction of actuation (X) towards the body (2), an elastic sheath (6; 206) enveloping the body (2) of the actuation member, a pusher (20; 120; 220) at the switch (12),
**characterized in that** the pusher (20; 120; 220) at least partially crosses the sheath (6; 206) and is rigid along the direction of actuation (X), at least for a prevailing portion thereof.

2. Electrical actuation member according to claim 1, wherein the pusher (20; 120) is mounted non-slidingly and sealed in a through hole (14) made in the sheath (6) and comprises a first end (24), internal to the sheath (6) and oriented towards the switch (12), and a second end (25), external to the sheath (6), accessible by a finger of a cyclist.

3. Electric actuation member according to claim 1, wherein the pusher (220) is mounted internally to the sheath (206) and comprises a first end (224), oriented towards the switch (12), and a second end (225) adhering to the sheath (206), indirectly accessible by a finger of a cyclist through the sheath (206) itself.

4. Electric actuation member according to claim 1, wherein the pusher (20; 120; 220) is made of metal.

5. Electric actuation member according to claim 1, wherein the pusher (20; 120; 220) is made of rigid polymeric material.

6. Electric actuation member according to claim 2 or 3, wherein the pusher (120) comprises a contact coating (126) of elastomeric material at its first end (24).

7. Electric actuation member according to claim 6, wherein the elastomeric material of the contact coating (126) has much lower elasticity than the elasticity of the sheath (6).

8. Electric actuation member according to claim 2, wherein the pusher (20; 120) comprises a central stem (21), a first head (22) protruding from the stem (21) and comprising the first end (24), a second head (23) protruding from the stem (21) and comprising the second end (25), wherein the stem (21) is housed in the through hole (14) in the sheath (6).

9. Electric actuation member according to claim 8, wherein, before the pusher (20; 120) is mounted in the sheath (6), the through hole (14) in the sheath (6) has an inner diameter smaller than the outer diameter of the stem (21), so that the sheath (6) is elastically clamped around the stem (21).

10. Electric actuation member according to claim 8, wherein, before the pusher (20; 120) is mounted in the sheath (6), the through hole (14) in the sheath (6) has a length higher than the length of the stem (21), so that the sheath (6) is elastically compressed between the first head (22) and the second head (23) of the pusher (20; 120).

11. Electric actuation member according to claim 8, wherein the sheath (6) comprises a first recessed seat (28) formed internally around the through hole (14), and wherein the first head (21) is at least partially accommodated in the first seat (28).

12. Electrical actuation member according to claim 8, wherein the sheath (6) comprises a second recessed seat (29), formed externally around the through hole (14), wherein the second head (23) is at least partially accommodated in the second seat (29).

13. Electrical actuation member according to claim 1, wherein the sheath (6) internally comprises a relief (31) extended around and spaced from the pusher (20; 120), and wherein the body (2) comprises a recess (32) extended around and spaced from the switch (12), wherein the relief (31) of the sheath (6) is engaged in the recess (32) of the body.

14. Electrical actuation member according to claim 1, wherein the electrical actuation member is provided for operating an electro-actuated gear shift on a control (1) intended for mounting on a handlebar of the bicycle.

15. Electrical actuation member according to claim 14, wherein the control (1) is an integrated control, also comprising a brake lever (4).
